Europäisches Patentamt

European Patent Office

Office européen des brevets

(19)

(11) Veröffentlichungsnummer: **0 088 942**
**B1**

# EUROPÄISCHE PATENTSCHRIFT

(12)

(45) Veröffentlichungstag der Patentschrift: **17.05.89**

(51) Int. Cl.⁴: **G 02 B 6/38**

(21) Anmeldenummer: **83102013.6**

(22) Anmeldetag: **02.03.83**

(54) **Verfahren zum Umhüllen eines Spleisses.**

(30) Priorität: **15.03.82 US 357950**

(43) Veröffentlichungstag der Anmeldung:
**21.09.83 Patentblatt 83/38**

(45) Bekanntmachung des Hinweises auf die
Patenterteilung:
**17.05.89 Patentblatt 89/20**

(84) Benannte Vertragsstaaten:
**DE FR GB**

(56) Entgegenhaltungen:
**US-A-3 914 145**
**US-A-4 049 480**
**US-A-4 091 062**
**US-A-4 296 996**

**PATENTS ABSTRACTS OF JAPAN, Band 3, Nr.
131 (E-148), 31. Oktober 1979, Seite 21 E 148; &
JP - A - 54 107 745 (NIPPON DENSHIN DENWA
KOSHA) 23.08.1979**

(73) Patentinhaber: **ALCATEL N.V.**
**Strawinskylaan 537 (World Trade Center)**
**NL-1077 XX Amsterdam (NL)**

(72) Erfinder: **Mc Duffee, Frederick Thomas**
**12 Country Club Rd. Apt. 39**
**Manchester, N.H. (US)**
Erfinder: **Kozikowski, Carrie Lee**
**Rt. 1, Box 416-A**
**Goode, Virginia 24556 (US)**

(74) Vertreter: **Graf, Georg Hugo, Dipl.-Ing. et al**
**Standard Elektrik Lorenz AG Patent- und
Lizenzwesen Postfach 30 09 29**
**D-7000 Stuttgart 30 (DE)**

EP 0 088 942 B1

Courier Press, Leamington Spa, England.

**Beschreibung**

Die Erfindung bezieht sich auf ein Verfahren zum Umhüllen eines Spleißes in einer optischen lichtleitfaser, die einen Überzug aus einem durch UV-Licht vernetzbaren Harz aufweist.

Das Spleißen ist ein Mittel um lange Lichtwellenleiter zu erhalten. Wenn der gespleißte Bereich verkabelt oder präzise aufgewickelt werden soll oder beim Abwickeln in genau gleicher Weise wie der Rest des Lichtwellenleiters verlaufen soll, dann muß der fertige Spleiß einschließlich seiner Umhüllung in seinen physikalischen Dimensionen und seiner Flexibilität mit dem originalen Lichtwellenleiter übereinstimmen. Dieses schließt Versteifungen, wie beispielsweise harte Epoxydmassen oder Tuben aus Stahl im Bereich des Spleißes aus. Nur Verfahren zum direkten Spleißen kommen in Frage.

Daher muß der gespleißte Bereich, sollen die genannten Anforderungen erfüllt werden, mit dem Material des Überzuges des Lichtwellenleiters wieder umhüllt werden, wobei der äußere Durchmesser nicht größer als der Durchmesser des Lichtwellenleiters sein darf.

Aus der JP—A—54—107 745 ist ein Verfahren zum Umhüllen eines Spleißes mit einem durch UV-Licht vernetzbaren Material bekannt. Bei diesem Verfahren wird ein UV-lightdurchlässiges Röhrchen über den zu umhüllenden Spleiß geschoben, das Löcher zum Einfüllen des vernetzbaren Materials aufweist. Nach dem Einfüllen des Materials erfolgt dessen Vernetzung mit UV-Licht.

Der Erfindung liegt die Aufgabe zugrunde, ein Verfahren zum Umhüllen eines Spleißes mit durch UV-Licht vernetzbarem Material anzugeben, bei dem das Einfüllen des Materials leichter durchführbar ist.

Die Lösung dieser Aufgabe erfolgt durch die im Anspruch 1 gekennzeichneten Schritte.

Ein Verfahren zum Herstellen einer Form zur Durchführung des Verfahrens nach Anspruch 1 geht aus Anspruch 4 hervor.

Ausgestaltungen der Erfindung können den Unteransprüchen entnommen werden.

Nachstehend wird die Erfindung anhand von Zeichnungen eines Ausführungsbeispieles näher erläutert. Es zeigen:

Fig. 1 eine Draufsicht auf eine äußere Form zur Herstellung einer Form aus für UV-Licht transparentem Material;

Fig. 2 einen Querschnitt durch die äußere Form entlang der Linie 2—2;

Fig. 3 eine perspektivische Darstellung der Form aus für UV-Licht transparentem Material nach dem Entfernen der äußeren Form und

Fig. 4 eine schematische Darstellung der Form gemäß Fig. 3 beim Einsatz im Verfahren zum Umhüllen eines Spleißes.

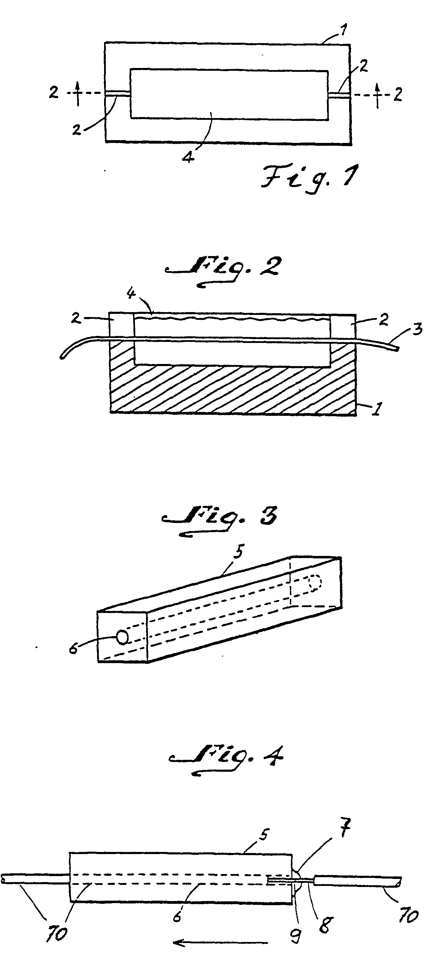

Beim vorliegenden Verfahren wird ein füre UV-Licht transparentes Material benutzt, das um einen Lichtwellenleiter geformt wird, um den gewünschten Formdurchmesser zu bilden. Der Lichtwellenleiter wird dann aus der Form entfernt und es verbleibt in der Form ein präzises lich oder Durchgang mit dem genau gleichen Durchmesser der Lichtwellenleiters. Diese Form erzeugt keinen Grat, da sie einstückig ist. Der umhüllte Spleiß kann leicht aus der Form entfernt werden, weil das durch UV-Light vernetzende Harz nicht am Material der Form klebt. Es wird kein Formauslöser benötigt.

Das Verfahren verwendet eine für UV-Licht transparente Form, die um ein gerades Stück eines ursprünglichen Lichtwellenleiters gamacht wird. Diese Form wird unter Benutzung einer äußeren Form hergestellt, die um ein metallisches Teil geformt wird. Nach dem Härten der äußeren Form und Entfernen des metallischen Teiles, werden mit einer Rasierklinge Schlitze in die gegenüberliegende Seiten der äußeren Form geschnitten, um ein Stück des Lichtwellenleiters in der durch das metallische Teil erzeugten Ausnehmung zu halten.

Ist eine äußere Form dieser Art nicht erhältlich, so kann jeder Behälter mit Mitteln zum Halten des geraden Stückes eines Lichtwellenleiters benutzt werden.

Dann wird das für UV-Licht transparente Material in die Ausnehmung der äußeren Form 1 gegossen. Der Lichtwellenleiter 3 wird dann in die Schlitze 2 gedrückt und gerade gezogen. Der Lichtwellenleiter 3 wird durch die Reibkräfte der Schlitze 2 der äußeren Form 1 sehr gut gerade gehalten. Danach wird das Material entgast, damit sich keine Luftblasen an dem Lichtwellenleiter 3 festsetzen. Das Material wird dann während zwei Stunden bei 150°C gehärtet.

Dann wird das Material mit dem Lichtwellenleiter 3 aus der Ausnehmung der äußeren Form 1 genommen und der Lichtwellenleiter herausgezogen, um die form 5 bit dem Durchgang 6 zu erhalten. Der Durchmesser des Durchganges 6 ist dabei gleich dem Durchmesser des Lichtwellenleiters, der gespleißt werden soll und der im Bereich des Spleißes umhüllt werden soll. Die Form 5 wird dann mit einer Rasierklinge bearbeitet, so daß alle Seiten glatt und gerade sind und ihre Länge ist dann etwa 16 mm.

Der zu spleißende Lichtwellenleiter 10 ist im Spleißbereich ohne Überzug, so daß die Lichtleitfaser 8 sichtbar ist und er wird in den Durchgang 6 in der Form 5 gezogen.

Der Spleiß 9 wird hergestellt und der Lichtwellenleiter 10 dann soweit durch die Form 5 gezogen, bis der Spleiß etwa 12,7 mm vor dem angrenzenden Ende der Form liegt. Mit einem Zahnstocher oder einem anderen entsprechenden Werkzeug wird ein Tropfen eines durch UV-Licht vernetzbaren Harzes 7 auf dieses Ende der form 5 gebracht. Das Harz 7 kann dann entgast werden, um bessere Umhüllungen zu erhalten. Danach wird der Lichtwellenleiter 10 mit dem Spleiß 9 sehr langsam in Richtung des Pfeiles durch das Harz 7 in den Durchgang 6 gezogen. Das dabei sich ergebende Vakuum zieht das Harz 7 mit in die Form 5 hinein. Der draußen verbleibende Rest des Harzes wird danach entfernt. Die Form 5 mit dem umhüllten Spleißbereich in ihrem Inneren wird dann unter eine UV-Licht abgebende Lampe gebracht, bis das den Spleißbereich umhüllende Harz vernetzt ist. Daraufhin wird der Lichtwellenleiter mit dem umhüllten Spleiß aus der Form 5 gezogen und geprüft. Die vorbeschriebenen Schritte Können wirderholt werden, wenn große Risse in der Umhüllung des Spleißes sichtbare sind. Nach der kompletten Umhüllung wird die Form 5 vom Lichtwellenleiter herunter gezogen und weggeworfen.

Wichtig bei diesem Verfahren ist, daß eine Form benutzt wird, die um einen geraden Lichtwellenleiter gemacht wird, der den gleichen Durchmesser hat, wie der zu spleißende Lichtwellenleiter. Das durch den in die Form gezogenen Lichtwellenleiter erzeugte Vakuum zieht das Harz im Bereich des Spleißes mit in die Form. Die Reibung zwischen dem Überzug des Lichtwellenleiters 10 und der Oberfläche des Durchganges 6 hält die Lichtleitfaser 8 im Spleißbereich gerade, so daß eine konzentrische Umhüllung um den Spleiß entsteht. Da die Form beim Härten leicht schrumpft, ist der Durchmesser des Durchganges etwas geringer als der Durchmesser des Lichtwellenleiters, was eine etwas dünnere Umhüllung des Spleißes zur Folge hat.

Das beschriebene Verfahren kann zum Umhüllen von Spleißen in Lichtwellenleiter mit einem Überzug aus beliebigem durch UV-Licht vernetzbarem Epoxid bestehen.

**Patentansprüche**

1. Verfahren zum Umhüllen eines Spleißes (9) eines Lichtwellenleiters (10), der eine optische Lichtleitfaser (8) und einen Überzug aufweist, mit einem durch UV-Licht vernetzbaren Harz, wobei eine für UV-Licht transparente Form (5) verwendet wird, die einen zylindrischen Durchgang (6) aufweist, dessen Durchmesser etwa gleich dem Durchmesser des Lichtwellenleiters (10) ist, gekennzeichnet durch folgende Schritte:
   a) Einführen der gespleißten Lichtleitfaser (10) in den Durchgang (6), derart, daß die freigelegten Lichtleitfasern (8) und der Spleiß (9) in einem geringen Abstand vor einem Ende der Form (5) liegen;
   b) Aufbrungen eines durch UV-Licht vernetzbaren Harzes (7) auf das Ende der Form (5), das dem Spleiß (9) gegenüberliegt;
   c) langsames Ziehen des Spleißes (9) durch das Harz (7) in den Durchgang (6), so daß ein Teil des Harzes (7) mitgezogen wird;
   d) Vernetzen des um den Spleiß (9) vorhandenen Harzes (7) durch Bestrahlen der Form (5) mit UV-Licht einer UV-Lampe und
   e) Entfernen der Form (5) von der Lichtleitfaser (8, 10), nachdem der Spleiß (9) vollkommen umhüllt ist.
   2. Verfahren nach Anspruch 1, gekennzeichnet durch die weiteren Schritte:
   a) Ziehen des Spleißes (9) nach dem Vernetzen des Harzes aus der Form (5) heraus;
   b) Prüfen des umhüllten Spleißbereiches der Lichtleitfaser und

   c) Wiederholen des Aufbringens des Harzes (7), des Ziehen des Spleißes und Vernetzen des Harzes, wenn große Risse im vernetzten Harz beim Prüfen gefunden werden, solange bis der Spleiß (9) vollkommen umhüllt ist.
   3. Verfahren nach Anspruch 1 oder 2, dadurch gekennzeichnet, daß die Form (5) eine nicht wieder verwendbare Form ist und das Entfernen der Form in zerstörender Art geschieht.
   4. Verfahren zur Herstellung einer Form (5) zur Durchführung des Verfahrens nach Anspruch 1 oder 2, gekennzeichnet durch folgende Schritte:
   a) Herstellen einer äußeren Form (1) um ein metallisches Teil herum;
   b) Härten der äußeren Form (1);
   c) Entfernen des metallischen Teils, so daß eine Ausnehmung (4) in der äußeren Form (1) entsteht;
   d) Anbringen von Schlitzen (2) in gegenüberliegenden Seiten der äußeren Form (1) zum Halten eines geraden Stückes eines Lichtwellenleiters (3);
   e) Einfüllen eines für UV-Licht transparenten Materials in die Ausnehmung (4);
   f) Einfügen des geraden Stückes des Lichtwellenleiters (3) in die Schlitze (2) und in das Material;
   g) Härten des Materials bei einer bestimmten Temperatur und während einer bestimmten Zeitdauer;
   h) Entfernen des gehärteten Materials mit dem Lichtwellenleiter (3) aus der äußeren Form (1) und
   i) Enteferenen des Lichtwellenleiters (3) aus dem gehärteten Material zum Erhalt der für UV-Licht transparenten Form (5).
   5. Verfahren nach Anspruch 4, dadurch gekennzeichnet, daß die Härtetemperatur gleich 150°C ist und die Zeitdauer zwei Stunden beträgt.
   6. Verfahren nach Anspruch 4 oder 5, dadurch gekennzeichnet, daß nach dem Entfernen des geraden Stückes des Lichtwellenleiters (3) aus dem gehärteten Material alle Seiten der Form (5) bearbeitet werden, so daß sie glatt und gerade sind.
   7. Verfahren nach Anspruch 4, dadurch gekennzeichnet, daß das für UV-Licht transparente Material nach dem Einfügen des geraden Stückes des Lichtwellenleiters (3) entgast wird, um ein Anlagern von Luftblasen an das gerade Stück des Lichtwellenleiters (3) zu vermeiden.
   8. Verfahren nach Anspruch 1 oder 2, dadurch gekennzeichnet, daß vor dem Ziehen des Spleißes (9) durch das Harz (7) dieses entgast wird.

**Revendications**

1. Procédé pour revétir une épissure (9) d'un guide d'onde optique (10) comprenant une fibre optique (8) et une gaine, par une résine durcissable par rayonnement UV, dans lequel on emploie un moule (5) transparent au rayonnement UV comportant un conduit cylindrique (6) dont le diamètre est à peu près égal à celui du guide d'onde optique (10), caractérisé par les étapes suivantes:
   a) introduire la fibre optique épissurée (10) dans le conduit (6), de sorte que la fibre (8) dénudée et l'épissure (9) se trouvent à une courte distance de l'extrémité du moule (5);

b) appliquer une résine durcissable par rayonnement UV (7) à l'extrémité du moule (5) près de laquelle se trouve l'épissure (9);

c) tirer lentement l'épissure (9) à travers la résine (7) dans le conduit (6), de sorte qu'une partie de la résine (7) soit entraînée avec elle;

d) durcir la résine (7) apportée autour de l'épissure (9) par irradiation du moule (5) par le rayonnement UV d'une lampe UV et

e) enlever le moule (5) de la fibre optique (8, 10), après que l'on ait fini de revêtir l'épissure (9).

2. Procédé conforme à la revendication 1, caractérisé par les étapes additionnelles suivantes;

a) tirer l'épissure (9) hors du moule (5) après durcissement de la résine dans celui-ci;

b) vérifier le revêtement dans la zone de l'épissure de la fibre optique et

c) répéter l'application de la résine, le tirage de l'épissure et le durcissement de la résine, si la vérification fait apparaître des manques importants dans la résine durcie, jusqu'a ce que l'épissure soit complètement revêtue.

3. Procédé conforme à la revendication 1 ou 2, caractérisé en ce que le moule (5) n'est pas réutilisable et en ce que l'enlèvement du moule consiste à le détruire.

4. Procédé de fabrication d'un moule (5) pour la mise en oeuvre du procédé selon la revendication 1 ou 2, caractérisé par les étapes suivantes:

a) réalisation d'un moule externe autour d'un objet métallique contenu dans celui-ci;

b) durcissement du moule exterene (1);

c) enlèvement de l'objet métallique, de sorte que cela produise une cavité (4) dans le moule externe (1);

d) réaliser des fentes (2) dans des parois opposées du moule externe (1) pour supporter un morceau rectiligne de guide d'onde optique (3);

e) remplir la cavité (4) d'un matériau transparent à la lumière UV;

f) disposer ledit morceau de guide d'onde optique (3) dans les fentes (2) et dans ledit matériau;

g) durcir ledit matériau par une température déterminée et durant un temps déterminé;

h) enlever le matériau durci, avec le guide d'onde optique (3) du moule externe (1) et

i) enlever le guide d'onde optique (3) du matériau durci pour obtenir le moule (5) transparent à la lumière UV.

5. Procédé conforme à la revendication 4, caractérisé en ce que la température de durcissement est de 150°C et le temps de deux heures.

6. Procédé selon la revendication 4 ou 5, caractérisé en ce que , après avoir enlevé le morceau rectiligne de quide d'onde optique (3) du matériau durci, toutes les faces du moule sont reprises de manière à être plates et lisses.

7. Procédé conforme à la revendication 4, caractérisé en ce que le matériau transparent à la lumière UV est dégazé, après la mise en place du morceau rectiligne de guide d'onde optique (3), pour éviter un emprisonnement de bulles d'air autour du morceau rectiligne de guide d'onde optique.

8. Procédé conforme à la revendication 1 ou 2, caractérisé en ce que, avant de tirer l'épissure (9) dans la résine (7), celle-ci est dégazée.

**Claims**

1. Method of jacketing a splice (9) of an optical waveguide (10), which consists of an optical fibre (8) and a covering, with an ultraviolet light curable resin, in which use is made of a mould (5) transparent to ultraviolet light, which mould has a cylindrical passageway (6) the diameter of which is approximately equal to the diameter of the optical waveguide (10), characterized by the following steps:

a) Introduction of the spliced optical fibre (10) into the passageway (6) in such a way that the exposed optical fibres (8) and the splice (9) are situated at a short distance from one end of the mould (5);

b) Application of an ultraviolet light curable resin (7) to the end of the mould (5) which is situated opposite to the splice (9);

c) Slow pulling of the splice (9) through the resin (7) into the passageway (9) so that part of the resin (7) is drawn in with it;

d) Curing of the resin (7) surrounding the splice (9) by radiation of the mould (5) with ultraviolet light from an ultraviolet lamp and

e) Removal of the mould (5) from the optical fibre (8, 10), after the splice (9) has been completely jacketed.

2. Method as claimed in Claim 1, characterized by the further steps:

a) Withdrawal of the splice (9) from the mould (5) after the curing of the resin;

b) Examination of the jacketed splice area of the optical fibre and

c) Repetition of the application of the resin (7), the withdrawal of the splice and curing of the resin, if the examination reveals large cracks in the cured resin, until the splice (9) is completely jacketed.

3. Method as claimed in either of Claims 1 or 2, characterized in that the mould (5) is a dispensable mould and that the mould is removed in a destructive manner.

4. Method of making a mould (5) for carrying out the method claimed in Claim 1 or 2, characterized by the following steps:

a) Making of an external mould (1) around a metal element;

b) Hardening of the outer mould (1);

c) Removal of the metal elements so that a recess (4) is produced in the outer mould (1);

d) Making of slits (2) in opposite sides of the outer mould (1) for retaining a straight piece of an optical waveguide (3);

e) Filling of a material transparent to ultraviolet light into the recess (4);

f) Insertion of the straight piece of the optical waveguide (3) into the slits (2) and into the material;

g) Hardening of the material at a certain temperature and for a certain period of time;

h) Removal of the hardened material with the optical waveguide (3) from the outer mould (1) and

i) Removal of the optical waveguide (3) from the hardened material in order to obtain the mould (5) transparent to ultraviolet light.

5. Method as claimed in Claim 4, characterized in that the hardening temperature is equal to 150°C and the period is two hours.

6. Method as claimed in either one of Claims 4 or 5, characterized in that after the straight part of the optical waveguide (3) has been removed from the hardened material, all the sides of the mould (5) are processed so that they are smooth and straight.

7. Method as claimed in Claim 4, characterized in that the material transparent to ultraviolet light is desired after the straight piece of the optical waveguide (3) has been inserted in order to prevent accumulation of air bubbles against the straight piece of the optical waveguide (3).

8. Method as claimed in either one of Claims 1 to 2, characterized in that, before the splice is drawn through the resin (7), the latter is deaired.

Fig. 1

Fig. 2

Fig. 3

Fig. 4